# EUROPÄISCHE PATENTSCHRIFT

(11) **EP 4 414 578 B1**
(45) Veröffentlichungstag und Bekanntmachung des Hinweises auf die Patenterteilung: **23.09.2026**
(21) Anmeldenummer: 24152279.6
(22) Anmeldetag: 17.01.2024
(51) Int. Cl.: F16C 33/66, F16C 19/54, F16C 19/16

(54) **SCHMIERRING ZUM TRANSPORTIEREN EINES SCHMIERMITTELS, LAGER, SOWIE PUMPE**
LUBRICATION RING FOR TRANSPORTING A LUBRICANT, BEARING, AND PUMP
BAGUE DE LUBRIFICATION DESTINÉE AU TRANSPORT D'UN LUBRIFIANT, PALIER ET POMPE

(30) Priorität: 08.02.2023 EP 23155553
(43) Veröffentlichungstag der Anmeldung: 14.08.2024
(73) Patentinhaber: Sulzer Management AG, 8401 Winterthur (CH)
(72) Erfinder: Baumgärtner, Benedict, 76689 Karlsdorf-Neuthard (DE); Kiesecker, Pascal, 76646 Bruchsal (DE)

(56) Entgegenhaltungen:
- WO-A1-2015/098896
- WO-A1-93/11381
- GB-A- 191 200 348
- US-A- 2 045 026
- US-B1- 6 460 656

## Beschreibung

Die Erfindung betrifft einen Schmierring zum Transportieren eines Schmiermittels aus einem Schmiermittelbehälter in einem Lager gemäss dem Oberbegriff des unabhängigen Anspruchs. Ferner betrifft die Erfindung ein Lager für eine Pumpe, sowie eine Pumpe mit einem solchen Lager.

Schmierringe dienen zur Schmiermittelversorgung von Lagern, welche für die Lagerung einer rotierenden Welle von z.B. Pumpen benötigt werden. Insbesondere bei horizontal angeordneten Pumpen ist dies eine bekannte Technik. Dabei hängt der Schmierring lose an der Welle oder an einem mit der Welle drehfest verbundenen Teil, wie z.B. einer Ölschleuder, und reicht bis in einen unterhalb der Welle, z.B. im Boden des Lagergehäuses, angeordneten Schmiermittelbehälter. Dreht sich die Welle, dreht sich der Schmierring mit und transportiert das Schmiermittel zu der Lagerstruktur. Die Lagerstruktur, die mit solchen Schmierringen geschmiert und zusätzlich auch gekühlt wird, kann als Wälzlager, z. B. als Kugellager, oder als Gleitlager ausgestaltet sein.

Ein wichtiges Einsatzgebiet für solche Schmierringe sind Pumpen, beispielsweise solche, die im Energiesektor, in der Öl- und Gasindustrie oder in der Stromerzeugungsindustrie, der chemischen Industrie, der Wasserindustrie oder der Pulpe- und Papierindustrie eingesetzt werden. Vor allem bei der Förderung von Kohlenwasserstoffen in der Öl- und Gasindustrie sind die Pumpen oft sehr harten Betriebsbedingungen ausgesetzt. Dies hat zur Folge, dass die Schmierung und die Kühlung des Lagers auch bei extremen Betriebsbedingungen zuverlässig gewährleistet werden muss. Eine unzureichende oder fehlende Schmierung schadet dem Lager und kann zu einer schweren Beschädigung oder sogar zum Ausfall des Lagers und damit der Pumpe führen. Besonders bei Anwendungen der Pumpe an schwerzugänglichen Orten ist der Totalausfall eines Lagers einer Pumpe oder einer Pumpe ein schwerwiegender Vorfall, der zu grossen wirtschaftlichen Verlusten führen kann.

Um die Schmiermittelzufuhr mittels eines Schmierrings zu optimieren, wurden bereits mehrere Möglichkeiten vorgeschlagen. Eine dieser Möglichkeiten betrifft die Optimierung der Oberflächen des Schmierrings. Bei einem konventionellen Schmierring sind die für den Transport des Schmiermittels vom Schmiermittelbehälter zur Lagerstruktur vorgesehenen Oberflächen glatt. Aus der US 2017/0370523 A1 ist ein Schmierring mit veränderten Oberflächen bekannt. Dabei werden die radial äussere Fläche des Schmierrings (im Weiteren auch Transportfläche genannt) und/oder die radial innere Fläche (im Weiteren auch Lauffläche genannt) und/oder die Seitenflächen, also diejenigen Flächen, welche den Schmierring in axialer Richtung begrenzen, ganz oder teilweise mit einer elektrostatischen Beschichtung versehen, sodass eine elektrostatische Anziehung auf das Schmiermittel ausgeübt wird. Dies steigert im Vergleich zum konventionellen Schmierring die Schmiermittelfördermenge. Allerdings haben diese Schmierringe auch Nachteile. Die Transferrate des Schmiermittels vom Schmiermittelbehälter zur Lagerstruktur ist abhängig von der Rotationsgeschwindigkeit der Welle. Die Rotationsgeschwindigkeit des Schmierrings ist zwar deutlich geringer als die der Welle, aber gerade bei hohen Rotationsgeschwindigkeiten der Welle immer noch gross genug, sodass die Zentrifugalkraft gegenüber der Coulombkraft überwiegt, wodurch das Schmiermittel nicht mehr am Schmierring haften bleibt sondern weggeschleudert wird, bevor es die Lagerstruktur erreicht hat. Dadurch nimmt die Menge an transportiertem Schmiermittel pro Zeit ab. Dies hat nicht nur einen negativen Einfluss auf die Schmierung des Lagers, sondern auch auf dessen Kühlung. Das Schmiermittel wird gleichzeitig auch zum Abtransport der im Lager entstandenen Wärme, also zur Kühlung des Lagers verwendet. Das heisst wenn eine geringere Menge Schmiermittel pro Zeit transportiert wird, ist auch der Wärmeabfluss geringer, was zu einer Aufheizung des Lagers führt. Im schlimmsten Fall kann dies zu einer thermischen Verformung des Lagers bzw. von Komponenten des Lagers oder der Welle führen, wodurch die gesamte Pumpe zerstört werden kann. Ein weiterer Schmierring, der jedoch fest mit der Welle verbunden ist, ist aus GB 00348 A bekannt.

Da Schmierringe die einzigen Komponenten sind, welche schmierringgeschmierte Lager mit Schmiermittel versorgen, ist ihre Leistungsfähigkeit direkt mit der Betriebs- oder Prozesssicherheit, in Bezug auf Schmierung und Kühlung, verbunden. Eine Verbesserung dieser Schmierringe kann zu einer Verbesserung der Lager in Bezug auf Verschleiss, Anwendungsgrenzen, wie z.B. Hoch- oder Niedriggeschwindigkeitsbetrieb und Lagertemperatur führen, wodurch das Risiko von Lagerausfällen drastisch reduziert wird.

Ausgehend von diesem Stand der Technik ist es daher eine Aufgabe der Erfindung einen Schmierring für ein Lager vorzuschlagen, welcher eine verbesserte Schmierung der Lagerstruktur gewährleistet. Ferner ist es eine Aufgabe der Erfindung, ein Lager sowie eine Pumpe mit einem solchen Schmierring vorzuschlagen.

Der diese Aufgabe lösende Gegenstand der Erfindung ist durch die Merkmale des unabhängigen Patentanspruchs gekennzeichnet.

Durch die Erfindung wird also ein Schmierring zum Transportieren eines Schmiermittels aus einem Schmiermittelbehälter in einem Lager vorgeschlagen, wobei der Schmierring zum Antrieb durch eine rotierende Welle ausgestaltet ist, welche mittels des Lagers gelagert ist, wobei der Schmierring eine Lauffläche zum Zusammenwirken mit der Welle, sowie eine Transportfläche zum Transportieren des Schmiermittels aufweist. Erfindungsgemäss weist die Transportfläche mehrere Taschen zum Transportieren des Schmiermittels auf, welche in Umfangsrichtung des Schmierrings benachbart zueinander angeordnet sind.

Im Betriebszustand hängt der Schmierring lose an der Welle oder an einem mit der Welle drehfest verbundenen Teil, wie z.B. einer Ölschleuder, und reicht bis in einen unterhalb der Welle, z.B. im Boden des Lagergehäuses, angeordneten Schmiermittelbehälter. Das bedeutet insbesondere, dass der Schmierring relativ zur Welle rotieren kann, der Schmierring also mit einer anderen Geschwindigkeit rotiert als die Welle. Üblicherweise dreht sich der Schmierring mit einer kleineren Rotationsgeschwindigkeit als die Welle. Angetrieben wird der Schmierring durch die Reibung zwischen der Welle bzw. eines drehfest mit der Welle verbundenen Teils und der Lauffläche des Drehrings.

Da der Schmierring üblicherweise von der Welle herabhängt, ist der Schmierring auch nicht zentriert auf der Welle. Folglich rotiert der Schmierring im Betriebszustand um eine andere Drehachse als die Welle.

Der Schmierring ist - wie die Bezeichnung «Ring» das aussagt - als ein ringförmiger Körper ausgestaltet, vorzugsweise als ein kreisringförmiger Körper. Der Schmierring ist also insbesondere nicht als eine Kreisscheibe oder eine Ringscheibe ausgestaltet. Insbesondere ist der Schmierring nicht drehfest mit der Welle verbunden.

Die Taschen sorgen für eine deutliche Erhöhung des Schmiermitteltransports pro Zeit. Im Betrieb werden die Taschen mit Schmiermittel aus dem Schmiermittelbehälter gefüllt und durch die Rotation des Schmierrings zur Lagerstruktur transportiert. Im Gegensatz zu z.B. einfachen Schaufelrädern, werden die Taschen durch Ränder an ihren Seiten parallel zur Umfangsrichtung begrenzt, wodurch kein Schmiermittel an ungewollten Stellen vom Schmierring abtropft. Ein weiterer Vorteil, der im Betrieb durch die Ausgestaltung mit den Taschen resultiert, ist es, dass durch die Textur mit den Taschen im Vergleich zu konventionellen Schmierringen stärkere Verwirbelungen im Schmiermittelbehälter generiert werden, woraus eine bessere Durchmischung des Schmiermittels im Schmiermittelbehälter resultiert. Hierdurch werden Temperaturschichtungen im Schmiermittelbehälter zumindest deutlich reduziert, sodass die Temperatur des Schmiermittels homogener ist. Zudem wird durch das zusätzliche Verspritzen des Schmiermittels im Lager auch ein zusätzlicher Kühleffekt bewirkt, der vorteilhaft für die Wärmeabfuhr aus dem Lager ist.

Der Schmierring weist eine Dicke in radialer Richtung auf. Wie allgemein üblich, wird mit der radialen Richtung diejenige Richtung bezeichnet, welche vom geometrischen Mittelpunkt des Schmierrings radial nach aussen gerichtet ist. Im Hinblick auf eine möglichst gute Transportrate für das Schmiermittel, hat es sich als vorteilhaft erwiesen, dass jede der Taschen eine Tiefe besitzt, welche mindestens zehn Prozent der Dicke des Schmierrings beträgt.

Bevorzugt hat der Schmierring mindestens 30 Taschen und höchstens 60 Taschen.

Insbesondere die Ausgestaltung des Schmierrings mit 45-50 Taschen hat sich beim Einsatz in Pumpen als besonders effektiv herausgestellt.

Ferner ist es bevorzugt, dass zwei benachbarte Taschen jeweils durch einen Steg voneinander getrennt werden. Das heisst, wenn man nur eine Tasche betrachtet, befindet sich an jedem ihrer Enden in Umfangsrichtung ein Steg.

Gemäß der Erfindung schliesst dabei jeder Steg mit der Umfangsrichtung einen von 90° verschiedenen Winkel ein.

Gleichzeitig beträgt im Hinblick auf eine optimale Transportrate für das Schmiermittel der Winkel höchstens 60° und im Speziellen etwa 40°
In einer anderen bevorzugten Ausführungsform erstreckt sich jeder Steg in radialer Richtung, das heisst jeder Steg schliesst mit der Umfangsrichtung einen Winkel von 90° ein. Diese Ausführungsform hat den Vorteil, dass der Schmierring unabhängig von der Drehrichtung der Welle eingesetzt werden kann. Das bedeutet, bei dieser Ausführungsform kann der Schmierring in beiden Drehrichtungen rotieren, also im Uhrzeigersinn und im Gegenuhrzeigersinn, ohne dass sich die Förderleistung dabei ändert. Der Schmierring eignet sich also in gleich guter Weise für beide Drehrichtungen der Welle.

Durch die Ausgestaltung mit den Stegen in Kombination mit den Taschen in der Transportflächen entsteht eine Art Mühlenrad, welches das Schmiermittel effektiver vom Schmiermittelbehälter zu der Lagerstruktur transportieren kann.

In einigen Ausführungsbeispielen wird jede Tasche bezüglich der radialen Richtung durch eine konkave Fläche begrenzt. Dadurch kann der Schmiermitteltransport weiter optimiert werden. Ebenso stellte sich heraus, dass die Fertigung solcher Taschen konstruktiv einfacher ist.

Gemäss einer bevorzugten Ausführungsform weist die Lauffläche des Schmierrings mehrere radiale Nuten auf. Diese erstrecken sich, in Umfangsrichtung gesehen, über die gesamte Lauffläche. Vorzugsweise sind die Nuten parallel zueinander angeordnet. Diese Ausführungsform bietet den Vorteil, dass ein besserer Kraftübertrag von der Welle auf den Schmierring stattfindet. Für einen zuverlässigen und ausreichenden Schmiermitteltransport ist es vorteilhaft, dass der Schmierring zuverlässig von der Welle zur Rotation angetrieben wird. Die Rotationsgeschwindigkeiten eines konventionellen Schmierrings sind deutlich geringer als die der Welle selbst. Deshalb ist die Ausführungsform mit den Nuten in der Lauffläche bevorzugt, weil dadurch die Reibung des Schmierrings auf der Welle erhöht und somit ein verbesserter Kraftübertrag erzeugt wird.

Hierbei ist zu erwähnen, dass die Nuten nicht zwingend notwendig für den zuverlässigen Betrieb des erfindungsgemässen Schmierrings sind, sondern nur eine besonders bevorzugte Ausführungsform darstellen. Es sind auch Ausgestaltungen des erfindungsgemässen Schmierrings mit einer andersartigen Ausgestaltung der Lauffläche, beispielsweise einer glatten Lauffläche, möglich.

Die Lauffläche und/oder die Transportfläche des Schmierrings bestehen vorzugsweise aus einem Kunststoff. Geeignete Kunststoffe sind beispielsweise Polyactide (polyactic acid: PLA) oder das unter dem Handelsnamen Teflon bekannte Polytetrafluorethen (PTFE). Es sind also Ausgestaltungen möglich, bei denen die Transportfläche und die Lauffläche aus einem Kunststoff bestehen, oder solche Ausgestaltungen bei denen nur eine der beiden Flächen aus einem Kunststoff besteht. Ferner ist es möglich, dass die Transportfläche aus einem anderen Kunststoff besteht als die Lauffläche.

Die Fertigung der beiden Flächen, also der Transportfläche und der Lauffläche aus einem Kunststoff bringt einige Vorteile mit sich. Zum Beispiel ist bei der Fertigung der Lauffläche aus Kunststoff nicht nur der verbesserte Kraftübertrag von der Welle auf den Schmierring vorteilhaft, sondern auch, dass der Schmierring bessere Gleiteigenschaften aufweist, was die Welle oder das mit der Welle drehfest verbundene Teil vor Materialabnutzung schützt. Bei konventionellen Schmierringen entsteht diese Abnutzung dadurch, dass der Schmierring meist aus einem Metall besteht, welches aufgrund seiner Härte, Material von der Welle oder dem mit der Welle drehfest verbundene Teil abreibt. Dies sorgt nicht nur dafür, dass die Welle oder das mit der Welle drehfest verbundene Teil geschädigt wird, sondern auch dafür, dass Metallpartikel in das Schmiermittel gelangen und somit durch den Schmierring in die Lagerstruktur transportiert werden. Dies kann sowohl zu einem Schaden an der Welle als auch an dem Lager führen, wodurch im schlimmsten der Ausfall der gesamten Pumpe resultiert.

Gemäss einem ersten bevorzugten Ausführungsbeispiel weist der Schmierring einen mehrteiligen Aufbau auf. Dabei umfasst der Schmierring ein Innenteil, ein Mittelteil und ein Aussenteil, von denen jedes ringförmig ausgebildet ist, wobei das Mittelteil in radialer Richtung gesehen zwischen dem Innenteil und dem Aussenteil angeordnet ist, wobei das Innenteil die Lauffläche beinhaltet, und wobei das Aussenteil die Transportfläche beinhaltet. Das Innenteil weist dabei den kleinsten Radius und das Aussenteil den größten Radius auf.

Bevorzugterweise ist das Mittelteil aus einem metallischen Werkstoff, insbesondere einem Edelstahl gefertigt. Dies hat den Vorteil, dass der Schmierring ohne eine Veränderung seiner äußeren Dimensionen eine höhere Masse aufweist (verglichen mit einer vollständig nichtmetallischen Ausgestaltung, beispielsweise einer vollständigen Ausgestaltung aus Kunststoff). Dadurch wird der Anpressdruck auf die Welle oder dem mit der Welle drehfest verbundenen Teil vergrössert. Dies hat zur Folge, dass der Antrieb des Schmierrings und damit der Schmiermitteltransport verbessert wird. Durch den verbesserten Antrieb lassen sich höhere Drehzahlen des Schmierrings erreichen, was den zusätzlichen Vorteil hat, dass das Schmiermittel insbesondere im Schmiermittelbehälter wesentlich besser durchmischt wird. Damit lässt sich eine Temperaturschichtung im Schmiermittelbehälter zumindest erheblich reduzieren, wodurch ein besserer Abtransport von Wärme aus dem Lager resultiert.

Dadurch, dass bei dieser Ausführungsform des Schmierrings seine Masse vergrössert wird, ohne dass seine äußeren Dimensionen verändert werden, besteht auch die Möglichkeit, bereits existierende bzw. im Betrieb befindliche Pumpen mit einem solchen Ausführungsbeispiel des erfindungsgemässen Schmierrings nachzurüsten. Dieses Ausführungsbeispiel ist somit eine effiziente und materialschonende Alternative zum Ersetzen von konventionellen Schmierringen und damit zur Optimierung des Schmiermitteltransports. Durch die gleichmässige Verteilung der durch das metallische Mittelteil hinzugefügten Masse über den gesamten Schmierring wird weder die Reibung zwischen Schmierring und Schmiermittel im Schmiermittelbehälter erhöht, noch treten Verformungen des Schmierrings durch ungleiche Gewichtsverteilungen auf, welche zu schlechteren Laufeigenschaften führen können.

Ebenso kann auch eine Kombination aus der Vergrößerung der Masse des Schmierrings und den Nuten in der Lauffläche zur Verbesserung des Kraftübertrags von der Welle auf den Schmierring vorgesehen sein.

Gemäss einem zweiten bevorzugten Ausführungsbeispiel umgreifen das Innenteil und das Aussenteil das Mittelteil. Die Umfassung kann je nach Ausführungsform komplett sein, also derart, dass das Mittelteil vollständig von dem Innenteil und dem Aussenteil umschlossen ist oder nur teilweise, also derart, dass das Mittelteil nicht vollständig umschlossen ist.

Das Aussenteil und das Innenteils sind vorzugsweise mit einem L-förmigen Profil ausgestaltet. Dabei bildet der lange Schenkel des L-förmigen Innenteils die Lauffläche, und der lange Schenkel des L-förmigen Aussenteils bildet die Transportfläche. Die beiden kurzen Schenkel der L-förmigen Profile umgreifen das Mittelteil.

Es sind aber auch andere Ausgestaltungen des Innenteils bzw. des Aussenteils möglich. Beispielsweise kann das Innenteil mit einem U-förmigen Profil ausgestaltet sein und das Aussenteil mit einem rechteckigen Profil oder umgekehrt, das Aussenteil mit einem U-förmigen Profil und das Innenteil mit einem rechteckigen Profil. Ebenso können das Innenteil und das Aussenteil mit einem U-förmigen Profil ausgestaltet sein.

Insbesondere die dreiteilige Ausgestaltung des Schmierrings bietet die Möglichkeit, den Schmierring optimal für die jeweilige Anwendung anzupassen, denn die Lauffläche kann im Hinblick auf den Antrieb des Schmierrings und auf einen möglichst geringen Verschleiss der Welle oder des Schmierrings optimiert werden, während die Transportfläche mit den Taschen im Hinblick auf die erzielte Transportrate für das Schmiermittel optimiert werden kann. Mit dem Mittelteil kann die Masse des Schmierrings erhöht werden.

Durch die Erfindung wird ferner ein Lager vorgeschlagen für eine Pumpe mit einer Welle zum Rotieren um eine axiale Richtung, umfassend ein Lagergehäuse und einen Lagerdeckel, der am Lagergehäuse befestigt ist, ferner umfassend eine Lagerstruktur zum Lagern der Welle, ein Schmiermittelbehälter für ein Schmiermittel, einen Schmierring zum Transportieren des Schmiermittels und zum Versorgen der Lagerstruktur mit dem Schmiermittel, wobei der Schmierring zum Antreiben durch die rotierende Welle angeordnet ist. Der Schmierring ist erfindungsgemäss ausgestaltet.

Weiterhin wird eine Pumpe vorgeschlagen, welche mindestens ein Lager umfasst, das erfindungsgemäss, also insbesondere mit einem erfindungsgemässen Schmierring, ausgestaltet ist.

Die Pumpe ist vorzugsweise eine Zentrifugalpumpe.

Im Folgenden wird die Erfindung anhand von Ausführungsbeispielen und anhand der Zeichnung näher erläutert. In der Zeichnung zeigen:
- Fig. 1:: eine schematische Darstellung eines Ausführungsbeispiels einer erfindungsgemässen Pumpe,
- Fig. 2:: eine Schnittdarstellung eines Ausführungsbeispiels eines erfindungsgemässen Lagers,
- Fig. 3:: eine schematische Schnittdarstellung eines ersten Ausführungsbeispiels eines erfindungsgemässen Schmierrings,
- Fig. 4:: eine schematische Schnittdarstellung eines zweiten Ausführungsbeispiels eines erfindungsgemässen Schmierrings,
- Fig. 5:: eine perspektivische Darstellung eines Teils des zweiten Ausführungsbeispiels, und
- Fig. 6:: eine Detaildarstellung des Aussenteils.

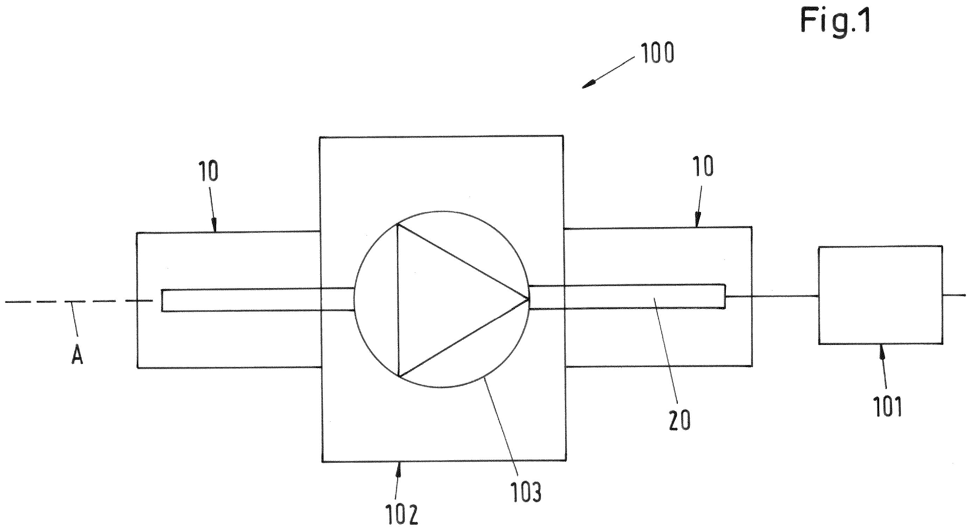

Die Erfindung betrifft einen Schmierring für ein Lager für eine Pumpe mit einer rotierenden Welle, sowie ein Lager für eine Pumpe, welches durch solch einen Schmierring mit Schmiermittel versorgt wird. Fig. 1 zeigt eine schematische Darstellung eines Ausführungsbeispiels einer solchen Pumpe, die in ihrer Gesamtheit mit dem Bezugszeichen 100 bezeichnet ist. Die Pumpe 100 ist eine horizontale, beidseitig gelagerte Zentrifugalpumpe («between bearing pump»), wie sie beispielsweise als Prozesspumpe in der Öl- und Gasindustrie verwendet wird. Die Pumpe 100 umfasst eine Laufradeinheit 102 mit einem Zentrifugalrotor 103 zum Fördern eines Fluids von einem Einlass zu einem Auslass (nicht dargestellt). Der Rotor 103 ist auf einer Welle 20 montiert, welche um eine Achse A drehbar ist, und den Rotor zur Rotation um die Achse A antreibt. Auf jeder Seite der Laufradeinheit 102 ist ein Lager 10 zur Lagerung der Welle 20 vorgesehen. Die Einzelheiten der Lager 10 werden im Folgenden näher beschrieben. Da die Laufradeinheit 102 zwischen den beiden Lagern 10 angeordnet ist, wird die Pumpe 100 auch als beidseitig gelagerte Pumpe bezeichnet. Ausserdem gibt es einen Antrieb 101, zum Beispiel einen Elektromotor, der die Welle 20 der Pumpe 100 dreht.

Es versteht sich von selbst, dass die Erfindung nicht auf beidseitig gelagerte Pumpen beschränkt ist, sondern auf alle Arten von Pumpen anwendbar ist, die Schmierringe zur Schmierung verwenden (z.B. fliegend gelagerte Pumpen, «Overhung Pumps»). Insbesondere ist die Erfindung für alle Typen von Pumpen geeignet, die Lager mit Ringölschmierungen aufweisen, bei denen also das Schmiermittel zu einer Lagerstruktur transportiert werden muss. Die Erfindung eignet sich aber auch für Lager mit Tauchölschmierung, bei denen die Lagerstruktur direkt im Schmiermittel angeordnet ist. Bei der Tauchölschmierung lässt sich durch die Erfindung ein stärkeres bzw. besseres Verspritzen des Schmiermittels erreichen, wodurch der Kühleffekt verbessert wird.

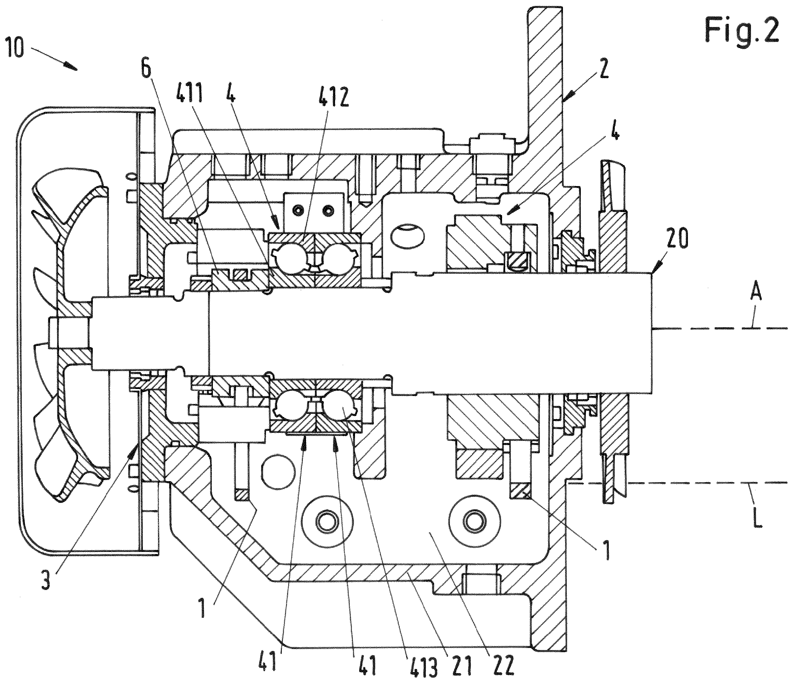

Fig. 2 zeigt eine Schnittdarstellung eines Ausführungsbeispiels eines erfindungsgemässen Lagers 10 mit darin befindlichen Schmierringen 1. Das Lager 10 umfasst ein Lagergehäuse 2 und einen Lagerdeckel 3, der an dem Lagergehäuse 2 beispielsweise durch Schrauben oder Bolzen befestigt ist. Ausserdem sind zwei Lagerstrukturen 4 zur Aufnahme und Lagerung der Welle 20 der Pumpe 100 in an sich bekannter Weise vorhanden. Die darstellungsgemäss linke Lagerstruktur 4 dient als Axiallager und umfasst hier zwei Kugellagerelemente 41, die jeweils einen inneren Lagerring 411, einen äusseren Lagerring 412 und eine Vielzahl von Kugeln 413 als Wälzkörper umfassen, die zwischen dem äusseren Lagerring 412 und dem inneren Lagerring 411 angeordnet sind. Der innere Lagerring 411 ist drehfest mit der Welle 20 verbunden und der äussere Lagerring 412 ist ortsfest gegenüber dem Lagergehäuse 2. Für die Schmierung und die Kühlung der Lagerstruktur 4 ist der Schmierring 1 vorgesehen. Der Schmierring 1 ist in einer Nut einer hülsenförmigen Ölschleuder 6 angeordnet, die drehfest mit der Welle 20 verbunden ist und sich mit der Welle 20 dreht. An einem Boden 21 des Lagergehäuses 2 des Lagers 10 ist ein Schmiermittelbehälter 22 für ein Schmiermittel, zum Beispiel ein Öl, vorgesehen. Während des Betriebs der Pumpe 100 ist der Schmiermittelbehälter 22 bis zu einem durch die Linie L in Fig. 2 angedeuteten Füllstand mit dem Schmiermittel gefüllt. Der Schmierring 1 hängt lose an der Welle 20 und ist teilweise in das Schmiermittel im Schmiermittelbehälter 22 eingetaucht. Wenn sich die Welle 20 dreht, dreht sich auch der Schmierring 1 und transportiert so das Schmiermittel aus dem Schmiermittelbehälter 22 zur Ölschleuder 6, die den Schmierstoff an die Lagerstruktur 4 abgibt. Die darstellungsgemäss rechte Lagerstruktur 4 dient als Radiallager und ist hier als Gleitlager ausgestaltet. Auch für diese als Gleitlager ausgestaltete Lagerstruktur 4 ist ein Schmierring 1 vorgesehen, der direkt auf der Welle 20 hängt und das Schmiermittel aus dem Schmiermittelbehälter 22 zur Lagerstruktur 4 transportiert.

Der Schmierring 1 hängt lose auf der Welle 20 bzw. der Ölschleuder 6 und wird durch die Reibung zwischen der Ölschleuder 6 und dem Schmierring 1 zur Rotation um die Welle 20 angetrieben. Der Schmierring 1 ist exzentrisch auf der Ölschleuder 6 bzw. der Welle 20 angeordnet, sodass der Schmierring 1 im Betriebszustand um eine andere Drehachse rotiert als die Welle 20. Die Reibung zwischen dem Schmierring 1 und der Ölschleuder 20 wird durch die Gravitationskraft verursacht, die auf den Schmierring wirkt. Wie bereits erwähnt, rotiert der Schmierring 1 im Betriebszustand relativ zu der Welle 20, Die Drehgeschwindigkeit des Schmierrings 1 ist kleiner als die Drehgeschwindigkeit der Welle.

Vorzugsweise ist der Schmierring 1 als ringförmiger Körper ausgestaltet, insbesondere als ein kreisringförmiger Körper. Bei der bevorzugten Ausgestaltung des Schmierrings 1 zur Ringölschmierung ist der Schmiermittelbehälter 22 unterhalb (bezüglich der durch die Gravitation festgelegten vertikalen Richtung) der Welle 20 angeordnet. Die Lagerstrukturen 4 sind oberhalb der Linie L angeordnet, d.h. die Lagerstrukturen 4 tauchen nicht in das Schmiermittel im Schmiermittelbehälter 22 ein, aber ein Teil des Schmierrings 1 der von der Welle 20 herabhängt, taucht in das Schmiermittel im Schmiermittelbehälter 22 ein und transportiert das Schmiermittel bei der Rotation des Schmierrings 1 aus dem Schmiermittelbehälter 22 in den Bereich der Lagerstrukturen 4.

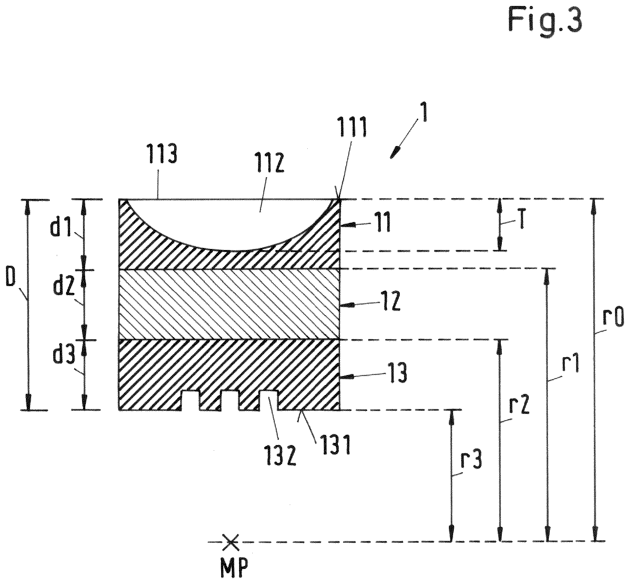

Fig. 3 zeigt eine schematische Schnittdarstellung eines ersten Ausführungsbeispiels eines erfindungsgemässen Schmierrings 1. Der Schmierring 1 umfasst dabei ein Aussenteil 11 mit einer Transportfläche 111, ein Mittelteil 12 und ein Innenteil 13 mit einer Lauffläche 131. Die Lauffläche 131 ist diejenige Oberfläche des Schmierrings 1, welche zum Antrieb des Schmierrings 1 mit der Welle 20 bzw. der Ölschleuder 6 zusammenwirkt. Die Transportfläche 111 ist diejenige Oberfläche des Schmierrings 1, die primär dem Transport des Schmiermittels dient. Die Lauffläche 131 ist die radial innen liegende Oberfläche, und die Transportfläche 111 ist die radial aussen liegende Oberfläche des Schmierrings 1

Alle drei Teile 11, 12, 13 sind jeweils ringförmig ausgestaltet. Die drei einzelnen Teile 11, 12, 13 sind so angeordnet, dass sie denselben geometrischen Mittelpunkt MP besitzen. Das Aussenteil 11 weist einen Radius r1 und eine Dicke d1 auf, das Mittelteil 12 einen Radius r2 und eine Dicke d2, und das Innenteil 13 einen Radius r3 und eine Dicke d3. Mit r0 wird der Aussenradius des gesamten Schmierrings 1 bezeichnet. Die drei ringförmigen Teile 11, 12, 13 sind so ausgestaltet, dass $r 3 < r 2 < r 1 < r 0 ,$ wobei r2=r3+d3, r1=r2+d2 und r0=r1+d1 gilt.

Mit der Dicke d1, d2, d3 ist jeweils die Erstreckung des jeweiligen Teils 11, 12, 13 in radialer Richtung gemeint. Die Dicke D des Schmierrings 1 ist dann die Summe aus d1, d2 und d3. Das heisst die drei ringförmigen Teile sind aneinander anliegend angeordnet, sodass in radialer Richtung gesehen ein mehrschichtiger Schmierring 1 entsteht.

Im Aussenteil 11 sind in der Transportfläche 111 mehrere Taschen 112 vorgesehen. Diese sind jeweils als Vertiefungen in der Transportfläche 111 des Aussenteils 11 ausgestaltet. Über den gesamten Schmierring 1 sind mehrere dieser Taschen 112 in Umfangsrichtung aneinander angrenzend angeordnet. Die Trennung in Umfangsrichtung zwischen zwei benachbarten Taschen 112 erfolgt jeweils durch einen Steg 113.

Jede Tasche 112 ist vorzugsweise als eine konkave Ausnehmung ausgestaltet. Somit ist jede Tasche 112 bezüglich der radialen Richtung durch eine konkave Fläche begrenzt. Jede Tasche 112 weist vorzugsweise eine Tiefe T auf, die mindestens zehn Prozent der Dicke D des Schmierrings 1 beträgt. Diese Massnahme ist vorteilhaft, um eine besonders gute Transportrate für das Schmiermittel zu erzielen
Im Innenteil 13 sind in der Lauffläche 131 mehrere, hier drei, Nuten 132 vorgesehen. Diese Nuten 132 verlaufen parallel zueinander und erstrecken sich in Umfangsrichtung jeweils über die gesamte Lauffläche 131 des Schmierrings 1. Das Aussenteil 11 und/oder das Innenteil 13 sind vorzugsweise aus einem Kunststoff gefertigt, beispielsweise aus einem Polyactide (polyactic acid PLA) oder aus Polytetrafluorethen (PTFE). Das Mittelteil 12 wird vorzugsweise aus einem metallischen Werkstoff, besonders bevorzugt aus einem Edelstahl gefertigt. Dies hat den Vorteil, dass der Schmierring ohne eine Veränderung seiner äußeren Dimensionen eine höhere Masse aufweist (verglichen mit einer vollständig nichtmetallischen Ausgestaltung, beispielsweise einer vollständigen Ausgestaltung aus Kunststoff). Dadurch wird der Anpressdruck auf die Welle oder auf die mit der Welle 20 drehfest verbundene Ölschleuder 6 vergrössert. Dies hat zur Folge, dass der Antrieb des Schmierrings 1 und damit der Schmiermitteltransport verbessert wird.

Um einen guten Antrieb des Schmierrings zu gewährleisten, hat es sich als vorteilhaft erwiesen, wenn jede der Nuten 132 jeweils eine Tiefe von mindestens einem Millimeter aufweist. Ferner ist es bevorzugt, dass jede der Nuten jeweils eine Breite von mindestens einem Millimeter aufweist. Dabei ist die Tiefe der Nut 132 ihre maximale Erstreckung in der radialen Richtung und die Breite der Nut 132 ist ihre Erstreckung in der Richtung die senkrecht auf der radialen Richtung und senkrecht auf der Umfangsrichtung steht.

Gemäss einer Variante des ersten Ausführungsbeispiels ist die Lauffläche 131 glatt ausgestaltet, das heisst in der Lauffläche 131 sind keine Nuten 132 vorhanden.

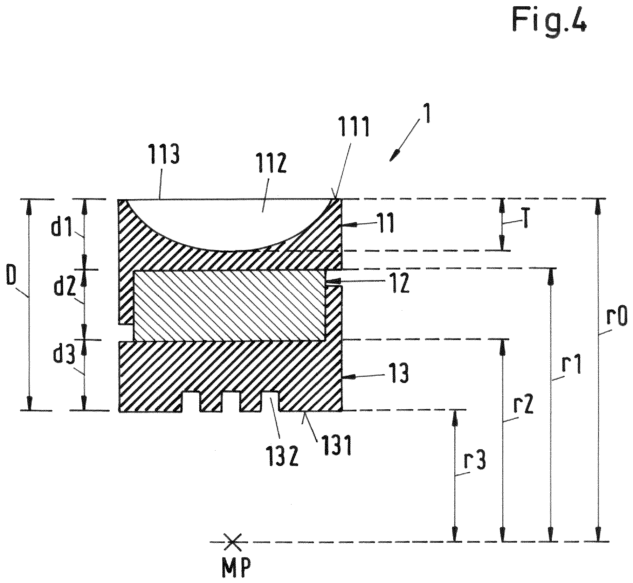

Fig. 4 zeigt eine schematische Schnittdarstellung eines zweiten Ausführungsbeispiels eines erfindungsgemässen Schmierrings 1. Hierbei weist der Schmierring 1 wieder einen Aufbau mit den drei Teilen 11, 12, 13 auf. Im Folgenden wird nur auf die Unterschiede zwischen dem zweiten Ausführungsbeispiel und dem vorher beschriebenen ersten Ausführungsbeispiel näher eingegangen. Gleiche Komponenten oder von der Funktion her gleichwertige Komponenten des zweiten Ausführungsbeispiels sind mit den gleichen Bezugszeichen bezeichnet wie bei dem ersten Ausführungsbeispiel. Es versteht sich, dass alle vorangehenden Erläuterungen des ersten Ausführungsbeispiels in gleicher Weise oder in sinngemäss gleicher Weise auch für das zweite Ausführungsbeispiel gelten.

In dem zweiten Ausführungsbeispiel sind das Aussenteil 11 und das Innenteil 13, derart ausgestaltet, dass sie das Mittelteil 12 umgreifen bzw. umfassen. Die Umfassung kann je nach Variante komplett sein, sodass das Mittelteil 12 vollständig von dem Aussenteil 11 und dem Innenteil 13 umschlossen ist, oder aber wie in Fig. 4 abgebildet nur teilweise erfolgen, sodass das Mittelteil 12 nicht vollständig umschlossen ist. Die Profile des Aussenteils 11 und des Innenteils 13 sind in dem zweiten Ausführungsbeispiel jeweils L-förmig ausgestaltet. Es sind aber auch andere Profile möglich. Weitere mögliche Ausführungsformen können mit einem U-förmigen Aussenteil 11 und einem rechteckigen Innenteil 13 oder einem rechteckigen Aussenteil 11 und einem U-förmigen Innenteil 13 ausgestaltet sein. Ebenso ist es möglich, dass sowohl das Aussenteil 11 wie auch das Innenteil 13 eine U-Form aufweisen.

Die drei Teile 11, 12, 13 sind drehfest miteinander verbunden. Dazu kann eine Klebverbindung oder eine Schweissverbindung vorgesehen sein. Auch ist es möglich, die drei Teile 11, 12, 13 mittels einer Pressfügung aneinander zu fixieren, sodass eine Presspassung entsteht.

Es sind natürlich noch weitere Ausführungsformen eines Schmierrings 1 möglich. Dabei kann der Schmierring 1 einstückig ausgestaltet sein, oder aus zwei Teilen oder aus mehr als drei Teilen 11, 12, 13 bestehen. In jedem Fall weist der Schmierring 1 eine erfindungsgemäss ausgestaltete Transportfläche 111 sowie eine Lauffläche 131 auf, welche mit oder ohne Nuten 132 ausgestaltet ist.

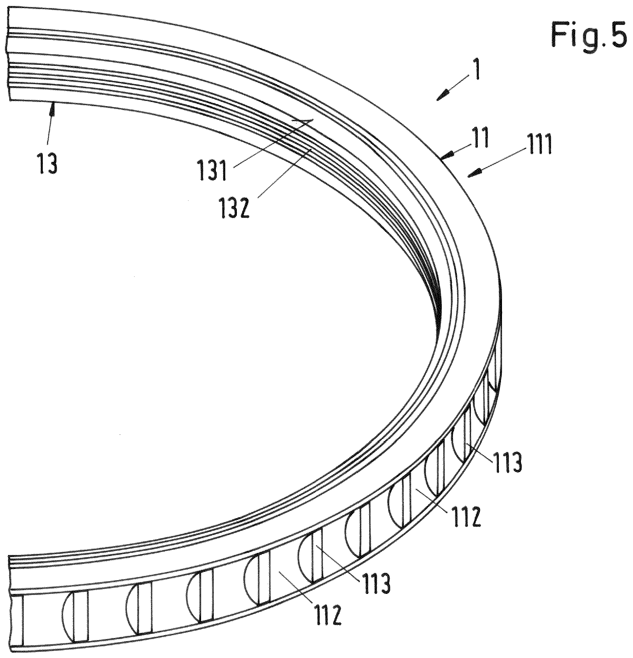

Fig. 5 zeigt eine perspektivische Darstellung eines Teils des zweiten Ausführungsbeispiels. Dabei ist das Aussenteil 11 mit der Transportfläche 111 und den mehreren nebeneinander angeordneten Taschen 112, welche jeweils durch Stege 113 voneinander getrennt sind, und das Innenteil 13 mit der Lauffläche 131 und den darin ausgebildeten, parallel zueinander angeordneten Nuten 132 dargestellt.

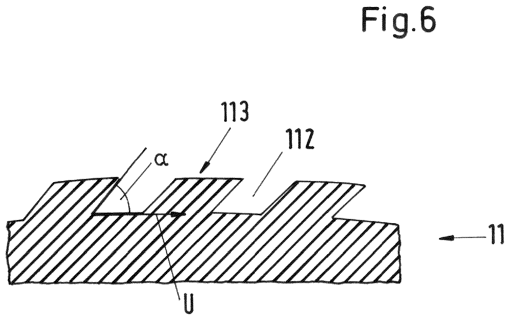

Fig. 6 zeigt eine Detaildarstellung des Aussenteils 11. Diese Ausgestaltung des Aussenteils 11 eignet sich in sinngemäss gleicher Weise sowohl für das erste Ausführungsbeispiel (Fig. 3) als auch für das zweite Ausführungsbeispiel (Fig. 4). Dabei sind in dem Aussenteil 11 mehrere zueinander benachbarte Taschen 112 ausgebildet, wobei zwei benachbarte Taschen jeweils durch einen der Steg 113 voneinander getrennt sind. Die Stege 113 schliessen mit der Umfangsrichtung U einen von 90° verschiedenen Winkel ein. Der Winkel α beträgt höchstens 60°. Speziell bevorzugt beträgt der Winkel α ungefähr 40° Ein von 90° verschiedener Winkel α ist im Hinblick auf die Transporteigenschaften des Schmierrings 1 von Vorteil. Grundsätzlich ist für viele Anwendungen ein Winkel α von 40° bevorzugt damit die Taschen 112 eine hydrodynamisch günstigere Form haben. Eine Ausgestaltung mit dem Winkel α gleich 90° würde zu einer erhöhten Reibung zwischen dem Schmierring 1 und dem Schmiermittel im Schmiermittelbehälter 22 führen. Zudem führt die Ausgestaltung mit dem Winkel α von höchstens 60° zu einem besseren Einschluss des Schmiermittels für den Transport in den Taschen 112. Dies liegt beispielsweise daran, dass Stege mit einem Winkel α von 90° gerade bei niedrigen Drehzahlen ein Abfliessen des Schmiermittels aufgrund der beim Rotieren des Schmierrings 1 entstehenden Kräfte, weniger gut verhindern können. Daher sind im Hinblick auf optimale Transporteigenschaften solche Ausgestaltungen vorgesehen, bei denen die Stege 113 mit der Umfangsrichtung U jeweils einen spitzen Winkel α, also einen Winkel α von höchstens 60° einschliessen.

Sowohl bei dem ersten wie auch dem zweiten Ausführungsbeispiel hat der Schmierring 1 bevorzugt mindestens 30 Taschen 112 und höchstens 60 Taschen 112. Insbesondere die Ausgestaltung des Schmierrings 1 mit 45-50 Taschen 112 hat sich beim Einsatz des Schmierrings in Pumpen 100 als besonders effektiv herausgestellt.

## Patentansprüche

1. Schmierring zum Transportieren eines Schmiermittels aus einem Schmiermittelbehälter (22) in einem Lager (10), wobei der Schmierring zum Antrieb durch eine rotierende Welle (20) ausgestaltet ist, welche mittels des Lagers (10) gelagert ist, wobei der Schmierring eine Lauffläche (131) zum Zusammenwirken mit der Welle (20), sowie eine Transportfläche (111) zum Transportieren des Schmiermittels aufweist, **dadurch gekennzeichnet, dass** die Transportfläche (111) mehrere Taschen (112) zum Transportieren des Schmiermittels aufweist, welche in Umfangsrichtung des Schmierrings benachbart zueinander angeordnet sind, und wobei zwei benachbarte Taschen (112) jeweils durch einen Steg (113) voneinander getrennt sind, jeder Steg (113) mit der Umfangsrichtung (U) einen, von 90° verschiedenen Winkel (α) einschliesst, dass der Winkel (α) höchstens 60° und vorzugsweise etwa 40° beträgt.

2. Schmierring nach Anspruch 1, welcher eine Dicke (D) in radialer Richtung aufweist, wobei jede Tasche (112) eine Tiefe (T) hat, die mindestens zehn Prozent der Dicke (D) des Schmierrings beträgt.

3. Schmierring nach einem der vorangehenden Ansprüche, welcher mindestens 30 Taschen (112) und höchstens 60 Taschen (112) hat.

4. Schmierring nach einem der vorangehenden Ansprüche, wobei jede Tasche (112) bezüglich der radialen Richtung durch eine konkave Fläche begrenzt wird.

5. Schmierring nach einem der vorherigen Ansprüche, wobei die Lauffläche (131) mehrere radiale Nuten (132) aufweist, welche sich in Umfangsrichtung gesehen über die gesamte Lauffläche (131) erstrecken, und die vorzugsweise parallel zueinander angeordnet sind.

6. Schmierring nach einem der vorangehenden Ansprüche, wobei die Lauffläche (131) aus einem Kunststoff besteht.

7. Schmierring nach einem der vorangehenden Ansprüche, wobei die Transportfläche (111) aus einem Kunststoff besteht.

8. Schmierring nach einem der vorangehenden Ansprüche, welcher ein Innenteil (13), ein Mittelteil (12) und ein Aussenteil (11) umfasst, von denen jedes ringförmig ausgebildet ist, wobei das Mittelteil (12) in radialer Richtung gesehen zwischen dem Innenteil (13) und dem Aussenteil (11) angeordnet ist, wobei das Innenteil (13) die Lauffläche (131) beinhaltet, und wobei das Aussenteil (11) die Transportfläche (111) beinhaltet.

9. Schmierring nach Anspruch 8, wobei das Mittelteil (12) aus einem metallischen Werkstoff, vorzugweise einem Edelstahl gefertigt ist.

10. Schmierring nach einem der Ansprüche 8-9, wobei das Innenteil (13) und das Aussenteil (11) das Mittelteil (12) umgreifen.

11. Lager für eine Pumpe mit einer Welle (20) zum Rotieren um eine axiale Richtung (A), umfassend ein Lagergehäuse (2) und einen Lagerdeckel (3), der am Lagergehäuse (2) befestigt ist, ferner umfassend eine Lagerstruktur (4) zum Lagern der Welle (20), ein Schmiermittelbehälter (22) für ein Schmiermittel, einen Schmierring (1) zum Transportieren des Schmiermittels und zum Versorgen der Lagerstruktur (4) mit dem Schmiermittel, wobei der Schmierring (1) zum Antreiben durch die rotierende Welle (20) angeordnet ist, **dadurch gekennzeichnet, dass** der Schmierring (1) gemäss einem der vorangehenden Ansprüche ausgestaltet ist.

12. Pumpe mit mindestens einem Lager (10), das gemäss Anspruch 114 ausgestaltet ist.

## Claims

1. A lubricating ring for transporting a lubricant from a lubricant reservoir (22) in a bearing (10), wherein the lubricating ring is configured for being driven by a rotating shaft (20), which is mounted by means of the bearing (10), wherein the lubricating ring has a running surface (131) for cooperating with the shaft (20), as well as a transport surface (111) for transporting the lubricant, **characterized in that** the transport surface (111) has a plurality of pockets (112) for transporting the lubricant, which are arranged adjacent to one another in the circumferential direction of the lubricating ring, and wherein two adjacent pockets (112) are each separated from one another by a web (113), each web (113) enclosing with the circumferential direction (U) an angle (α) different from 90°, that the angle (α) is at most 60° and preferably about 40°.

2. The lubricating ring according to claim 1, which has a thickness (D) in the radial direction, wherein each pocket (112) has a depth (T), which is at least ten percent of the thickness (D) of the lubricating ring.

3. The lubricating ring according to one of the preceding claims, which has at least 30 pockets (112) and at most 60 pockets (112).

4. The lubricating ring according to one of the preceding claims, wherein each pocket (112) is delimited with respect to the radial direction by a concave surface.

5. The lubricating ring according to one of the preceding claims, wherein the running surface (131) has a plurality of radial grooves (132), which, viewed in the circumferential direction, extend over the entire running surface (131), and which are preferably arranged parallel to one another.

6. The lubricating ring according to one of the preceding claims, wherein the running surface (131) consists of a plastic.

7. The lubricating ring according to one of the preceding claims, wherein the transport surface (111) consists of a plastic.

8. The lubricating ring according to one of the preceding claims, which comprises an inner part (13), a middle part (12) and an outer part (11), each of which is formed annularly, wherein the middle part (12), viewed in the radial direction, is arranged between the inner part (13) and the outer part (11), wherein the inner part (13) contains the running surface (131), and wherein the outer part (11) contains the transport surface (111).

9. The lubricating ring according to claim 8, wherein the middle part (12) is made of a metallic material, preferably a stainless steel.

10. The lubricating ring according to one of claims 8-9, wherein the inner part (13) and the outer part (11) encompass the middle part (12).

11. A bearing for a pump with a shaft (20) for rotating about an axial direction (A), comprising a bearing housing (2) and a bearing cover (3), which is fastened to the bearing housing (2), further comprising a bearing structure (4) for mounting the shaft (20), a lubricant reservoir (22) for a lubricant, a lubricating ring (1) for transporting the lubricant and for supplying the bearing structure (4) with the lubricant, wherein the lubricating ring (1) is arranged for being driven by the rotating shaft (20), **characterized in that** the lubricating ring (1) is configured according to one of the preceding claims.

12. A pump with at least one bearing (10), which is configured according to claim 11.

## Revendications

1. Anneau de lubrification destiné à transporter un lubrifiant depuis un réservoir de lubrifiant (22) dans un palier (10), l'anneau de lubrification étant configuré pour être entraîné par un arbre rotatif (20), lequel est supporté au moyen du palier (10), l'anneau de lubrification présentant une surface de roulement (131) destinée à coopérer avec l'arbre (20), ainsi qu'une surface de transport (111) destinée au transport du lubrifiant, **caractérisé en ce que** la surface de transport (111) présente plusieurs poches (112) destinées au transport du lubrifiant, lesquelles sont disposées adjacentes les unes aux autres dans la direction circonférentielle de l'anneau de lubrification, et deux poches adjacentes (112) étant respectivement séparées l'une de l'autre par une nervure (113), chaque nervure (113) formant avec la direction circonférentielle (U) un angle (α) différent de 90°, **en ce que** l'angle (α) est d'au plus 60° et de préférence d'environ 40°.

2. Anneau de lubrification selon la revendication 1, lequel présente une épaisseur (D) dans la direction radiale, chaque poche (112) ayant une profondeur (T) qui est d'au moins dix pour cent de l'épaisseur (D) de l'anneau de lubrification.

3. Anneau de lubrification selon l'une des revendications précédentes, lequel présente au moins 30 poches (112) et au plus 60 poches (112).

4. Anneau de lubrification selon l'une des revendications précédentes, dans lequel chaque poche (112) est délimitée, par rapport à la direction radiale, par une surface concave.

5. Anneau de lubrification selon l'une des revendications précédentes, dans lequel la surface de roulement (131) présente plusieurs rainures radiales (132), lesquelles, vues dans la direction circonférentielle, s'étendent sur toute la surface de roulement (131), et lesquelles sont de préférence disposées parallèlement les unes aux autres.

6. Anneau de lubrification selon l'une des revendications précédentes, dans lequel la surface de roulement (131) est constituée d'une matière plastique.

7. Anneau de lubrification selon l'une des revendications précédentes, dans lequel la surface de transport (111) est constituée d'une matière plastique.

8. Anneau de lubrification selon l'une des revendications précédentes, lequel comprend une partie intérieure (13), une partie médiane (12) et une partie extérieure (11), chacune étant réalisée en forme d'anneau, la partie médiane (12), vue dans la direction radiale, étant disposée entre la partie intérieure (13) et la partie extérieure (11), la partie intérieure (13) comprenant la surface de roulement (131), et la partie extérieure (11) comprenant la surface de transport (111).

9. Anneau de lubrification selon la revendication 8, dans lequel la partie médiane (12) est fabriquée à partir d'un matériau métallique, de préférence d'un acier inoxydable.

10. Anneau de lubrification selon l'une des revendications 8 à 9, dans lequel la partie intérieure (13) et la partie extérieure (11) entourent la partie médiane (12).

11. Palier pour une pompe avec un arbre (20) destiné à tourner autour d'une direction axiale (A), comprenant un carter de palier (2) et un couvercle de palier (3), qui est fixé au carter de palier (2), comprenant en outre une structure de palier (4) destinée à supporter l'arbre (20), un réservoir de lubrifiant (22) pour un lubrifiant, un anneau de lubrification (1) destiné à transporter le lubrifiant et à alimenter la structure de palier (4) en lubrifiant, l'anneau de lubrification (1) étant disposé pour être entraîné par l'arbre rotatif (20), **caractérisé en ce que** l'anneau de lubrification (1) est configuré selon l'une des revendications précédentes.

12. Pompe comprenant au moins un palier (10), qui est configuré selon la revendication 11.
